# EUROPÄISCHE PATENTSCHRIFT

(11) **EP 1 420 034 B1**
(45) Veröffentlichungstag und Bekanntmachung des Hinweises auf die Patenterteilung: **06.10.2004**
(21) Anmeldenummer: 03025496.5
(22) Anmeldetag: 06.11.2003
(51) Int. Cl.: C08F 6/00

(54) **Verfahren zur Rückgewinnung von Restethylen bei der Herstellung von Vinylester-Ethylen-Mischpolymerisaten**
Process for recovery of residual ethylene from the production of vinylester-ethylene copolymers
Procédé de récupération d'éthylène résiduel lors de la production de copolymères d'esters vinyliques-éthylène

(30) Priorität: 14.11.2002 DE 10253043
(43) Veröffentlichungstag der Anmeldung: 19.05.2004
(73) Patentinhaber: Wacker Polymer Systems GmbH & Co. KG, 84489 Burghausen (DE)
(72) Erfinder: Weitzel, Hans-Peter, Dr., 84571 Reischach (DE); Braunsperger, Robert, 84489 Burghausen (DE)
(74) Vertreter: Schuderer, Michael, Dr.

(56) Entgegenhaltungen:
- EP-A- 0 722 953
- WO-A-01/00559
- DE-A- 19 709 254
- DATABASE WPI Section Ch, Week 197847 Derwent Publications Ltd., London, GB; Class A14, AN 1978-84816A XP002267667 & JP 53 119801 A (KURARAY CO LTD) 19. Oktober 1978 (1978-10-19)

## Beschreibung

Die Erfindung betrifft ein Verfahren zur Herstellung von Vinylester und Ethylen enthaltenden Mischpolymerisaten, unter Rückgewinnung des nicht umgesetzten Restethylens, durch radikalisch initiierte Polymerisation von einem oder mehreren Vinylestern, Ethylen, sowie gegebenenfalls weiteren damit copolymerisierbaren, ethylenisch ungesättigten Monomeren, bei einem Druck von 5 bis 100 bar abs., in wässrigem Medium, nach dem Emulsionsoder Suspensionspolymerisationsverfahren.

Polymerisate auf Basis von Vinylester und Ethylen, sowie gegebenenfalls Vinylchlorid und (Meth)acrylatmonomeren werden vor allem in Form deren wässrigen Dispersionen oder in Wasser redispergierbaren Polymerpulver in vielerlei Anwendungen, beispielsweise als Beschichtungsmittel oder Klebemittel für die unterschiedlichsten Substrate eingesetzt. Zur Stabilisierung dieser Polymerisate werden Schutzkolloide oder niedermolekulare, oberflächenaktive Verbindungen eingesetzt. Als Schutzkolloide werden in der Regel Polyvinylalkohole verwendet.

Bei der großtechnischen Polymerisation sind hohe Umsatzgrade Stand der Technik. So werden die Polymerisate üblicherweise bis zu einem Restmonomergehalt von < 0.1 Gew.-%, bevorzugt < 0.05 Gew.-%, und im Falle von Vinylchlorid von < 0.01 Gew.-% auspolymerisiert. Diese hohen Umsätze beziehen sich aber lediglich auf die unter Polymerisationsbedingungen flüssigen Monomere. Ethylen als unter Polymerisationsbedingungen gasförmiges Monomer folgt diesen Gesetzmäßigkeiten nicht. Zum einen polymerisiert es langsamer als beispielsweise Vinylacetat, zum anderen hält es sich zu einem großen Bruchteil in der Gasphase auf und kann unter den üblichen Bedingungen der Emulsionspolymerisation nicht erfasst werden. Die Polymerisation läuft nämlich nur in der flüssigen Phase ab, unter Teilnahme des in Wasser, Monomer und Partikel gelösten Ethylens.

Die großtechnische Polymerisation soll unter wirtschaftlichen Gesichtspunkten in möglichst kurzen Zeiträumen beendet sein, was aber zwangsläufig dazu führt, dass das eingesetzte Ethylen nicht vollständig verbraucht werden kann. Üblicherweise wird die Polymerisation bei einem Ethylen-Restgasgehalt von < 5 Gew.-%, bevorzugt < 2 Gew.-%, abgebrochen und der Reaktionsansatz entspannt. Der Entspannungsvorgang beinhaltet die Überführung des Reaktionsgemisches (Polymerdispersion + Restgas) von einem Druckreaktor in einem drucklosen Reaktor unter Abtrennung des restlichen Ethylens. Der erhaltene Latex wird dann in bekannter Weise weiter entmonomerisiert. Das überschüssige Ethylen hingegen wird entsorgt, im allgemeinen verbrannt.

Diese dem Stand der Technik entsprechende Vorgehensweise hat den Nachteil der geringen Wirtschaftlichkeit, wegen schlechter Monomerverwertung, und hohen Entsorgungskosten. Einer Wiederverwendung des anfallenden Ethylens steht die Tatsache entgegen, dass das Restgas zuvor wieder auf hohen Druck (> 80 bar) rekomprimiert werden müßte. Dieser energieintensive Prozess steht der Wiederverwertung aus wirtschaftlichen Gründen entgegen, da vor der Rekomprimierung das Restgas noch aufwendig gereinigt werden müsste, um beispielsweise Druckstöße bei der Komprimierung zu vermeiden.

Aus dem Stand der Technik sind verschiedene Verfahren zur Restethylenrückgewinnung bekannt. Die WO-A 01/00559 beschreibt Verfahren zur Wiedergewinnung von Ethylen aus dem bei der Vinylacetatherstellung anfallendem ethylenhaltigen Inertgasstrom. Dazu wird das ethylenhaltige Inertgas in Vinylacetat aufgenommen, das Ethylen in einem Vakuumkessel durch Entspannung freigesetzt, und anschließend zur Wiederverwendung rekomprimiert. Weiter wird ein Verfahren beschrieben, bei dem der ethylenhaltige Inertgasstrom in Essigsäure aufgenommen wird, in einer Strippkolonne mit ethylenhaltigem Restgas in Kontakt gebracht wird, das Ethylen am Kolonnenkopf zurückgewonnen wird, und in der Vinylacetat-Synthese wiederverwertet wird. Die Restmonomerentfernung bei der Gasphasenpolymerisation von Copolymeren von Ethylen und höheren Olefinen ist Gegenstand der EP-A 127253. Dazu wird das feste Copolymer bei reduziertem Druck von den höheren Olefinen befreit, und anschließend mit Inertgas-freiem Reaktorgas behandelt, welches schließlich in die Polymerisation zurückgeführt wird.

Aufgabe der vorliegenden Erfindung war es, ein Verfahren bereitzustellen, das es ermöglicht das anfallende Restgas in wirtschaftlicher Weise wiederzuverwenden.

Gegenstand der Erfindung ist ein Verfahren zur Herstellung von Vinylester und Ethylen enthaltenden Mischpolymerisaten, unter Rückgewinnung des nicht umgesetzten Restethylens, durch radikalisch initiierte Polymerisation von einem oder mehreren Vinylestern, Ethylen, sowie gegebenenfalls weiteren damit copolymerisierbaren, ethylenisch ungesättigten Monomeren, bei einem Druck von 5 bis 100 bar abs., in wässrigem Medium, nach dem Emulsions- oder Suspensionspolymerisationsverfahren, dadurch gekennzeichnet, dass nach Abschluß der Polymerisation das Reaktionsgemisch auf einen Druck von 0.1 bis 5 bar abs. entspannt wird, die Gasphase mit dem Ethylen enthaltenden Restgas auf einen Druck von 2 bis 20 bar abs. verdichtet wird, anschließend in Vinylester aufgenommen wird, und das damit erhaltene Gemisch in der Polymerisation wiederverwendet wird.

Geeignete Vinylester sind solche von Carbonsäuren mit 1 bis 18 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete, mit Vinylester und Ethylen copolymerisierbare, Monomere sind Acrylsäureester oder Methacrylsäureester von unverzweigten oder verzweigten Alkoholen mit 1 bis 18 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat. Geeignet sind auch Vinylhalogenide wie Vinylchlorid.

Gegebenenfalls können noch 0.1 bis 50 Gew.-%, bezogen auf das Gesamtgewicht des Monomergemisches, Hilfsmonomere copolymerisiert werden. Bevorzugt werden 0.5 bis 15 Gew.-% Hilfsmonomere eingesetzt. Beispiele für Hilfsmonomere sind ethylenisch ungesättigte Mono- und Dicarbonsäuren; ethylenisch ungesättigte Carbonsäureamide und -nitrile; ethylenisch ungesättigte Sulfonsäuren bzw. deren Salze. Weitere Beispiele sind vorvernetzende Comonomere, wie mehrfach ethylenisch ungesättigte Comonomere, oder nachvernetzende Comonomere, beispielsweise N-Methylolacrylamid (NMA). Geeignet sind auch epoxidfunktionelle Comonomere wie Glycidylmethacrylat und siliciumfunktionelle Comonomere.

Bevorzugt werden Gemische eingesetzt aus Vinylacetat und Ethylen; sowie Gemische aus Vinylacetat und weiteren Vinylestern wie Vinyllaurat oder Vinylestern von α-verzweigten Monocarbonsäuren mit 9 bis 13 C-Atomen und Ethylen; sowie Gemische aus Vinylchlorid, Ethylen und Vinylester, beispielweise Vinyllaurat.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -20°C bis +20°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt:
1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate nach dem Emulsionspolymerisationsverfahren oder nach dem Suspensionspolymerisationsverfahren, in Gegenwart von Schutzkolloiden und/oder Emulgatoren, ist an sich bekannt. Die Polymerisationstemperatur beträgt im allgemeinen 40°C bis 100°C, vorzugsweise 60°C bis 90°C. Bei der Copolymerisation mit Ethylen wird im allgemeinen bei einem Druck von 5 bis 100 bar abs. gearbeitet.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole.

Die Schutzkolloide werden im allgemeinen in einer Menge von insgesamt 1 bis 20 Gew.-%, bezogen auf das Gesamtgewicht der Monomere, bei der Polymerisation zugesetzt. Der Schutzkolloid-Anteil kann sowohl vollständig vorgelegt, als auch teilweise vorgelegt und teilweise zudosiert werden.

Für die Emulsionspolymerisation geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten. Im allgemeinen werden die Emulgatoren in einer Menge von 0.1 bis 5 Gew.-% bezogen auf die Monomermenge, verwendet werden.

Die Polymerisation wird im allgemeinen bei einem Umsatz von > 95 % abgeschlossen, vorzugsweise bis zu einem Umsatz von 95 bis 99 Gew.-% der unter Polymerisationsbedingungen flüssigen Monomere geführt. Anschließend wird das Polymerisationsgemisch auf einen Druck von 0.1 bis 5 bar abs., vorzugsweise 0.1 bis 1 bar abs., entspannt. Im allgemeinen wird dazu das Reaktionsgemisch in einen unter dem entsprechenden Druck stehenden Reaktor überführt.

Nach der Entspannung wird die Polymerdispersion abgelassen und die Gasphase auf einen Druck von 2 bis 20 bar abs., vorzugsweise 5 bis 10 bar abs., verdichtet. Geeignete Verdichter sind beispielsweise Flüssigkeitsringverdichter, Kolbenverdichter, Drehschiebeverdichter oder Schraubenkompressoren. Nach der Verdichtung wird das Restgas mit Vinylester-Monomer, welches auf ein entsprechendes Druckniveau verdichtet wird, gemischt. Das Mischungsverhältnis beträgt im allgemeinen von 0.1 bis 10 Gew.-% Ethylen, bezogen auf die Vinylestermenge. Geeignete Mischvorrichtungen sind beispielsweise Statikmischer, Rührwerke, Mischrohre oder Absorptionsanlagen.

Das Gemisch wird anschließend wieder bei der Polymerisation der entsprechenden Vinylester-Ethylen-Mischpolymerisate eingesetzt. Das erfindungsgemäße Verfahren eignet sich insbesondere für einen vollkontinuierlichen Betrieb ist aber in gleicher Weise auch für diskontinuierliche Batchprozesse einsetzbar.

Das Verfahrensprinzip beinhaltet die Lösung des Restethylens bei niedrigen Drücken in dem verwendeten Monomeren und Rückführung der Mischung in den Reaktionsansatz. Im Idealfall fällt somit kein Restgas mehr an. Die Rekomprimierung auf eine hohe Druckstufe und notwendige Reinigung des Restgases kann bei diesem Vorgehen entfallen.

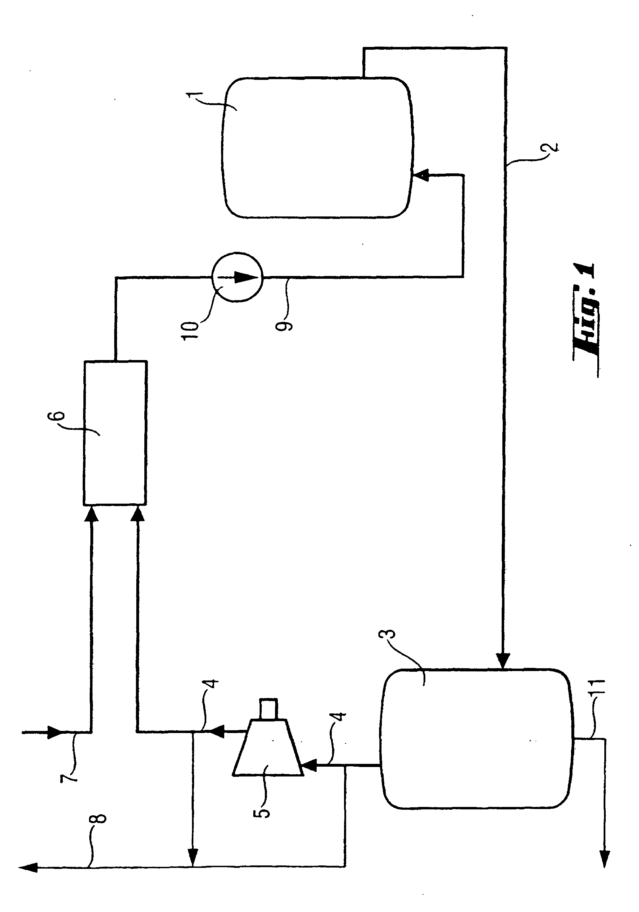

Zur weiteren Erläuterung des erfindungsgemäßen Prozesses dient folgendes Beispiel (siehe Abbildung 1).

### Beispiel 1:

In einem Druckreaktor 1 mit Dosierpumpen, Rührer, Mantelkühlung, und Zuleitungen (2, 9) zu dessen Befüllung und Entleerung wurden 1170 g Wasser, 728 g Polyvinylalkohol und 1930 g Vinylacetat vorgelegt. Diese Voremulsion wurde auf einen pH-Wert von 4.0 eingestellt und auf 55°C erwärmt. Anschließend wurde der Autoklav mit einem Ethylendruck von 18 bar beaufschlagt. Zum Starten der Polymerisation wurden wässrige Lösungen von t-Butylhydroperoxid (TBHP, 1.5 %-ig) und Brüggolit (2.5 %-ig) mit je 30 g/h zudosiert. Die Temperatur wurde durch Kühlung auf 55°C gehalten. 60 Minuten nach Beginn der Reaktion wurde mit der Dosierung von 484 g Vinylacetat in 90 Minuten und 168 g Polyvinylalkohol und 120 g Wasser in 120 Minuten begonnen. Ethylen wurde ab Reaktionsbeginn bei 38 bar nachdosiert, bis zu einer Gesamtmenge von 260 g. Anschließend wurde noch eine Stunde auspolymerisiert.
Der Restethylengehalt betrug zu diesem Zeitpunkt ca. 1 bis 1.5 Gew.-% bezogen auf Dispersionsmenge. Anschließend wurde das Reaktionsgemisch über die Leitung 2 in den unter Vakuum (Druck: 0.3 bar abs.) stehenden Reaktor 3 entspannt.
Üblicherweise wurde bisher das Restgas direkt über die Leitung 4 und 8 entsorgt, das heißt zur Verbrennung geleitet.
Im vorliegenden Beispiel wurde das Restgas stattdessen über den Verdichter 5 auf 9 bar abs. verdichtet und über das Mischelement 6 in Vinylacetat, das aus der Versorgung 7 mit einem Druck von 8 bar abs. eingespeist wurde, in einem Gewichtsverhältnis von 3 Gew.-% Ethylen auf Vinylacetat eingelöst. Die resultierende Mischung wurde mittels Pumpe 10 wieder in den Reaktor 1 zurückgeführt.

## Patentansprüche

1. Verfahren zur Herstellung von Vinylester und Ethylen enthaltenden Mischpolymerisaten, unter Rückgewinnung des nicht umgesetzten Restethylens, durch radikalisch initiierte Polymerisation von einem oder mehreren Vinylestern, Ethylen, sowie gegebenenfalls weiteren damit copolymerisierbaren, ethylenisch ungesättigten Monomeren, bei einem Druck von 5 bis 100 bar abs., in wässrigem Medium, nach dem Emulsions- oder Suspensionspolymerisationsverfahren, **dadurch gekennzeichnet, dass** nach Abschluß der Polymerisation das Reaktionsgemisch auf einen Druck von 0.1 bis 5 bar abs. entspannt wird, die Gasphase mit dem Ethylen enthaltenden Restgas auf einen Druck von 2 bis 20 bar abs. verdichtet wird, anschließend in Vinylester aufgenommen wird, und das damit erhaltene Gemisch in der Polymerisation wiederverwendet wird.

2. Verfahren nach Anspruch 1, **dadurch gekennzeichnet, dass** Ethylen in Vinylester in einem Mischungsverhältnis von 0.1 bis 10 Gew.-% Ethylen, bezogen auf die Vinylestermenge, aufgenommen wird.

3. Verfahren nach Anspruch 1 oder 2, **dadurch gekennzeichnet, dass** das Verfahren vollkontinuierlich oder diskontinuierlich betrieben wird.

4. Verfahren nach Anspruch 1 bis 3, **dadurch gekennzeichnet, dass** die Polymerisation bei einem Umsatz von 95 bis 99 Gew.-% der unter Polymerisationsbedingungen flüssigen Monomere, abgeschlossen wird.

5. Verfahren nach Anspruch 1 bis 4, **dadurch gekennzeichnet, dass** zur Polymerisation Gemische eingesetzt werden aus Vinylacetat und Ethylen, sowie Gemische aus Vinylacetat und weiteren Vinylestern wie Vinyllaurat oder Vinylestern von α-verzweigten Monocarbonsäuren mit 9 bis 13 C-Atomen und Ethylen, sowie Gemische aus Vinylchlorid, Ethylen und Vinylester.

## Claims

1. Process for preparing copolymers in which vinyl esters and ethylene are present, while reclaiming the residual unreacted ethylene, via free-radical-initiated polymerization of one or more vinyl esters, ethylene, and also, where appropriate, other ethylenically unsaturated monomers copolymerizable therewith, at a pressure of from 5 to 100 bar abs., in an aqueous medium, by emulsion or suspension polymerization, **characterized in that** it comprises, after termination of the polymerization, depressurizing the reaction mixture to a pressure of from 0.1 to 5 bar abs., compressing the gas phase with the residual ethylene-containing gas to a pressure of from 2 to 20 bar abs., and then absorbing the gas phase into vinyl esters, and reusing the resultant mixture in the polymerization process.

2. Process according to Claim 1, **characterized in that** ethylene is absorbed into vinyl esters with a mixing ratio of from 0.1 to 10% by weight of ethylene, based on the amount of vinyl esters.

3. Process according to Claim 1 or 2, **characterized in that** it is operated continuously or batchwise.

4. Process according to any of Claims 1 to 3, **characterized in that** the polymerization process is terminated at a conversion of from 95 to 99% by weight of the monomers which are liquid under polymerization conditions.

5. Process according to any of Claims 1 to 4, **characterized in that**, for the polymerization process, use is made of a mixture of vinyl acetate and ethylene, or else of a mixture of vinyl acetate and other vinyl esters, such as vinyl laurate, or vinyl esters of α-branched monocarboxylic acids having from 9 to 13 carbon atoms, and ethylene, or else of a mixture of vinyl chloride, ethylene and vinyl ester.

## Revendications

1. Procédé de fabrication de copolymères contenant de l'ester vinylique et de l'éthylène, avec récupération de l'éthylène résiduel non converti, par polymérisation amorcée par voie radicalaire d'un ou plusieurs esters vinyliques, d'éthylène, ainsi qu'éventuellement d'autres comonomères éthylèniquement insaturés copolymérisables avec ceux-ci, à une pression de 5 à 100 bars abs., dans un milieu aqueux, selon le procédé de la polymérisation en émulsion ou en suspension, **caractérisé en ce qu'**à la fin de la polymérisation le mélange réactionnel est détendu à une pression de 0,1 à 5 bars abs., la phase gazeuse avec le gaz résiduel contenant de l'éthylène est comprimée à une pression de 2 à 20 bars abs., est ensuite introduite dans de l'ester vinylique, et le mélange ainsi obtenu est réutilisé dans la polymérisation.

2. Procédé selon la revendication 1, **caractérisé en ce que** de l'éthylène est introduit dans de l'ester vinylique dans un rapport de mélange de 0,1 à 10 % en poids d'éthylène par rapport à la quantité d'ester vinylique.

3. Procédé selon la revendication 1 ou la revendication 2, **caractérisé en ce que** le procédé est exploité de façon entièrement continue ou de façon discontinue.

4. Procédé selon l'une quelconque des revendications 1 à 3, **caractérisé en ce que** la polymérisation se termine avec un degré de conversion de 95 à 99 % en poids des monomères se trouvant à l'état liquide dans les conditions de polymérisation.

5. Procédé selon l'une quelconque des revendications 1 à 4, **caractérisé en ce que** des mélanges d'acétate de vinyle et d'éthylène, ainsi que des mélanges d'acétate de vinyle et d'autres esters vinyliques tels que le laurate de vinyle, ou d'esters vinyliques d'acides monocarboxyliques ramifiés en α présentant 9 à 13 atomes de carbone, et d'éthylène, ainsi que des mélanges de chlorure de vinyle, d'éthylène et d'ester vinylique, sont utilisés pour la polymérisation.
